(19) **Europäisches Patentamt / European Patent Office / Office européen des brevets**

(11) **EP 4 570 973 A1**

(12) **EUROPEAN PATENT APPLICATION**
published in accordance with Art. 153(4) EPC

(43) Date of publication:
**18.06.2025 Bulletin 2025/25**

(21) Application number: **23882226.6**

(22) Date of filing: **29.08.2023**

(51) International Patent Classification (IPC):
*D01F 9/22* $^{(2006.01)}$    *B29B 11/16* $^{(2006.01)}$
*B29K 105/10* $^{(2006.01)}$

(52) Cooperative Patent Classification (CPC):
**B29B 11/16; D01F 9/22**

(86) International application number:
**PCT/JP2023/031152**

(87) International publication number:
**WO 2024/090012 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022   JP 2022169746**

(71) Applicant: **Toray Industries, Inc.**
**Tokyo 103-8666 (JP)**

(72) Inventors:
• **YOMO Takayuki**
  **Iyo-gun, Ehime 791-3193 (JP)**
• **DAIMON Hiroaki**
  **Iyo-gun, Ehime 791-3193 (JP)**
• **WATANABE Jun**
  **Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(54) **CARBON FIBER BUNDLE, TOW-PREG, CARBON FIBER-REINFORCED COMPOSITE MATERIAL AND PRESSURE VESSEL, AND METHOD FOR PRODUCING CARBON FIBER BUNDLE**

(57)    An object of the present invention is to provide a carbon fiber bundle having a small variation in the mass per unit length (g/m) of the carbon fiber bundle, and having an excellent tensile strength of resin-impregnated strands and tensile modulus of resin-impregnated strands. To achieve the above-mentioned object, the present invention provides a carbon fiber bundle having a tensile strength of resin-impregnated strands of from 4.5 to 6.5 GPa, a tensile modulus of resin-impregnated strands of from 205 to 270 GPa, the number of filaments of from 6,000 to 36,000, and a coefficient of variation represented by the ratio of the standard deviation to the mean value of the mass per unit length (g/m) of the carbon fiber bundle, of from 0.00 to 0.5%.

EP 4 570 973 A1

**Description**

Technical Field

The present invention relates to a carbon fiber bundle suitable for use in a fiber-reinforced plastic, a towpreg, a carbon fiber-reinforced composite material and a pressure vessel, as well as to a method of producing the carbon fiber bundle.

Background Art

Due to growing concerns for environmental issues, applications of carbon fibers as reinforcing fibers for composite materials are increasingly expanding in various fields, and there is a strong demand for even higher performance and quality of carbon fibers. Since increasing the mechanical properties of carbon fibers contributes to reducing the weight of members such as pressure vessels, it is important to increase the mechanical properties such as tensile strength and tensile modulus. At the same time, achieving a higher quality of carbon fibers, such as reducing the number of fuzzes or reducing the variation in basis weight, is also an important object from the viewpoint of stabilizing the quality of a final member. In brittle materials such as carbon fibers, it is possible to achieve, for example, an increased tensile strength, by decreasing the flaw size in accordance with the Griffith equation, or by increasing the fracture toughness. In particular, improving the fracture toughness is effective in that a higher tensile strength can be obtained without depending on the state of the flaw size (Patent Literature 1). It is also important to eliminate the difference between skin-core structure present in a cross-section of a single fiber, in order to increase the mechanical properties such as tensile strength and tensile modulus in a well-balanced manner.

To improve performance while reducing the difference between skin-core structure present in a cross-section of a single fiber, there have been proposed, for example: a method of achieving a shorter stabilization time by performing stabilization in a liquid phase, thereby achieving a higher performance of carbon fibers; a method of increasing the stabilization temperature, by adjusting the residence time in each furnace in an oxidation oven composed of a plurality of furnaces, depending on the density of precursor fibers for carbon fibers; and a method of adjusting the stabilization atmosphere (Patent Literatures 2 to 4).

**In** Patent Literatures 3 and 4, the temperature control region in the stabilization step is divided into 2 to 3 sections, and the control of the rate of increase of specific gravity with respect to the stabilization time or the control of the stabilization temperature with respect to the specific gravity are carried out to control the difference between skin-core structure of the stabilized fibers. The tensile modulus can be increased by allowing the structure forming the fibers to be oriented in the fiber axial direction. Therefore, to improve the tensile modulus, a method in which stretching is performed in the coagulation step in the spinning step, and a method in which stretching is performed in the stabilization step in the carbonization step, are proposed (Patent Literatures 5 and 6).

Further, it is necessary to reduce the variation in the basis weight of carbon fibers, in order to stably reflect the mechanical performance of the carbon fibers to the resulting composite. To stabilize the basis weight of a towpreg, for example, a method is proposed in which the basis weight per fiber bundle is measured before impregnating the fiber bundles, and the fiber bundles are combined such that the fiber basis weight is within a specified range to produce a towpreg (Patent Literature 7).

In filament winding (hereinafter also abbreviated as "FW") or automatic lamination, which is a method of molding a carbon fiber-reinforced composite material, an FRP is produced using one or a limited number of a tape-shaped unidirectional prepregs. Therefore, having a large variation in basis weight within or between the tape-shaped unidirectional prepreg(s) leads to problems that a variation occurs in the total weight of the FRP formed from the tape-shaped unidirectional prepreg(s), and that the thickness of each portion of the FRP deviates from the designed thickness. However, such problems can be solved.

Citation List

Patent Literatures

Patent Literature 1: WO 97/45576
Patent Literature 2: JP 2004-300600 A
Patent Literature 3: JP 2006-283225 A
Patent Literature 4: JP 2017-66580 A
Patent Literature 5: JP 2009-079343 A

Patent Literature 6: WO 2008/063886
Patent Literature 7: JP 2022-519335 A

Summary of Invention

Technical Problem

However, the method disclosed in Patent Literature 1 is intended merely to control the single fiber fineness and the difference between skin-core structure, to achieve improved physical properties by controlling the surface flaws of the carbon fiber or by controlling the microstructure distribution, and is not intended to improve the variation in the mass per unit length (g/m).

In the methods disclosed in Patent Literatures 2 to 4, as well, the quality of carbon fibers is improved by focusing on the heating temperature and heating time in the stabilization step, but the methods do not focus on the stretch ratio in the carbonization step and the spinning step, and are not intended to improve the variation in the mass per unit length (g/m).

In the method disclosed in Patent Literature 5, the orientation parameter of the original fibers is increased by performing stretching at a high ratio in the coagulation step, instead of steam stretching, so that a higher tensile modulus is more likely to be obtained. However, there is a possibility that the variation in the mass per unit length (g/m) may increase, because the amount of stretching is not controlled including that in the carbonization step, at the time of performing the temperature control in the stabilization step.

In the method disclosed in Patent Literature 6, high strand strength and modulus are obtained by performing stretching at a high ratio in the stabilization step, but only in carbon fibers having a small fineness, and the application to the stretching of carbon fibers having a large fineness in the stabilization step, and to the temperature control are not intended.

Further, in Patent Literature 7, a method of producing a towpreg by combining a plurality of fiber bundles is used, but there is a problem that the method cannot be applied to the case of performing the processing using one fiber bundle.

The present invention has been made in view of the above-mentioned problems, and an object of the present invention is to provide a carbon fiber bundle having a small variation in the mass per unit length (g/m) in the fiber longitudinal direction, and having an excellent tensile strength of resin-impregnated strands and tensile modulus of resin-impregnated strands.

Solution to Problem

The present inventors have discovered a method of obtaining a carbon fiber bundle, which method achieves both improvements in the tensile strength and the elastic modulus as well as a reduction in the variation in the mass per unit length (g/m) in the fiber longitudinal direction to levels not attainable with a conventional carbon fiber bundle, by increasing the fineness of precursor fibers for carbon fibers to increase productivity, as well as achieving an improved control of the difference between skin-core structure of a single fiber, and controlling the stretch ratio in the spinning step and the stabilization step, thereby arriving at the present invention.

To achieve the object described above, the carbon fiber bundle according to the present invention has the following features.

(1) A carbon fiber bundle having:

a tensile strength of resin-impregnated strands of from 4.5 to 6.5 GPa,
a tensile modulus of resin-impregnated strands of from 205 to 270 GPa,
the number of filaments of from 6,000 to 36,000, and
a coefficient of variation, which is represented by the ratio of the standard deviation to the mean value ([standard deviation] / [mean value] $\times$ 100 (%)), of the mass per unit length (g/m) of the carbon fiber bundle, of from 0.00 to 0.5%.

(2) The carbon fiber bundle according to (1), wherein the carbon fiber bundle has:

an average single-fiber diameter d (unit: $\mu$m) of the carbon fibers of 6.0 or more and less than 8.0;
a blackening thickness K (unit: $\mu$m) of the carbon fibers of $0.38 \times$ d or more; and
an orientation parameter of crystallites, $\Pi$, of 79.5% or more.

(3) The carbon fiber bundle according to (1) or (2), wherein, when the ratio (Ri/Ro) of the crystallinity Ri of an inner layer to the crystallinity Ro of an outer layer, of a single fiber, as determined by Raman spectroscopy, is defined as Rr, the value of Rr is 1.03 or less.

(4) The carbon fiber bundle according to any one of (1) to (3), wherein the number of fuzzes during the unwinding of the carbon fiber bundle is 1.5/m or less.

(5) A towpreg using the carbon fiber bundle according to any one of (1) to (4).

(6) A carbon fiber-reinforced composite material using the carbon fiber bundle according to any one of (1) to (4).

(7) A pressure vessel using the carbon fiber bundle according to any one of (1) to (4).

(8) A method of producing the carbon fiber bundle according to any one of (1) to (4) described above, the method including:

subjecting a carbon fiber precursor fiber bundle having a single fiber fineness of from 1.4 to 3.4 dtex to a stabilization treatment, while stretching the fiber bundle at a stretch ratio of from 1.30 to 3.00, to obtain a stabilized fiber bundle, and

then subjecting the stabilized fiber bundle to a heat treatment in an inert atmosphere at a temperature of from 1,200 to 3,000°C, to obtain the carbon fiber bundle.

(9) The method of producing the carbon fiber bundle, according to (8),

wherein the stabilization treatment includes a two-stage treatment process including a first stabilization step and a second stabilization step,

wherein, in the first stabilization step, the first stabilization step is performed until the ratio of the peak intensity at 1,453 cm$^{-1}$ to the peak intensity at 1,370 cm$^{-1}$ in an infrared spectrum is within the range of from 0.74 to 0.80, and

wherein, in the second stabilization step, which is performed after the first stabilization step, the second stabilization is performed until the ratio of the peak intensity at 1,453 cm$^{-1}$ to the peak intensity at 1,370 cm$^{-1}$ in the infrared spectrum is within the range of from 0.60 to 0.65, and until the ratio of the peak intensity at 1,254 cm$^{-1}$ to the peak intensity at 1,370 cm$^{-1}$ in the infrared spectrum is within the range of from 0.70 to 0.80, and

wherein the stabilized fiber bundle obtained through the stabilization treatment process is subjected to a heat treatment in an inert atmosphere at a temperature of from 1,200 to 3,000°C, to obtain the carbon fiber bundle.

Advantageous Effects of Invention

According to the present invention, it is possible to obtain a carbon fiber bundle which has an excellent fiber content stability during the molding of a composite material and which is capable of producing a high-performance carbon fiber-reinforced composite material that exhibits excellent tensile strength and tensile modulus, by controlling the stretching in the spinning step and the stabilization step, even in the case of using a carbon fiber precursor fiber bundle (namely, a bundle of precursor fibers for carbon fibers) having a high fineness and a high productivity.

Description of Embodiments

The carbon fiber bundle according to the present invention has the number of filaments of 6,000 or more, and preferably 12,000 or more. Since the productivity varies depending on the fiber speed and the number of filaments, in the case of producing a composite material by the FW method, having a larger number of filaments makes it possible to efficiently produce a composite material. When the number of filaments is 6,000 or more, it is satisfactory from the viewpoint of the productivity. The upper limit of the number of filaments is not particularly limited. However, the larger the number of filaments, the more likely it is to cause a variation in the mass per unit length (g/m) due to uneven stretching in the interior and exterior of the fiber bundle in the stretching step. Therefore, the number of filaments is preferably 36,000 or less.

The carbon fiber bundle according to the present invention has a tensile strength of resin-impregnated strands (also simply abbreviated as "strand strength") of 4.5 GPa or more, preferably 5.3 GPa or more, and more preferably 5.5 GPa or more. When the strand strength is 4.5 GPa or more, the resulting composite material produced using the carbon fiber bundle has a potential to exhibit a good tensile strength. The strand strength is determined by the method described in the strand tensile test of the carbon fiber bundle to be described later. The upper limit of the strand strength is not particularly limited, but the upper limit is usually 6.5 GPa or less from the viewpoint of the productivity.

The carbon fiber bundle according to the present invention has a tensile modulus of resin-impregnated strands (also simply abbreviated as "strand modulus") of from 205 to 270 GPa, preferably from 212 to 260 GPa, more preferably from 217 to 255 GPa. Having a strand modulus of from 205 to 270 GPa is preferred because an excellent balance between the strand modulus and the strand strength can be obtained. In particular, a carbon fiber bundle having an excellent strand strength can be more easily obtained, by controlling the strand modulus within the range of from 212 to 260 GPa. The strand modulus is determined by the method described in the strand tensile test of the carbon fiber bundle to be described later. The strand modulus can be controlled by applying a tension to the fiber bundle or by changing the carbonization temperature, mainly in any of the heat treatment processes in the production process of the carbon fiber bundle.

Further, when the mass per unit length (mass (g) per meter of length; the unit is g/m) of the carbon fiber bundle is determined, in the carbon fiber bundle according to the present invention, the ratio of the standard deviation thereof to the mean value thereof (the coefficient of variation (%) represented by [standard deviation] / [mean value] $\times$ 100 (%)) (hereinafter, also simply referred to as "coefficient of variation of the mass per unit length of the carbon fiber bundle") is from 0.00 to 0.5%. The upper limit of the coefficient of variation of the mass per unit length of the carbon fiber bundle is preferably 0.4% or less, and more preferably 0.25% or less. The lower limit of the coefficient of variation of the mass per unit length of the carbon fiber bundle is most preferably 0.00%. From the viewpoint of the productivity and practical use, however, a carbon fiber bundle having a good balance between the cost and the performance can be obtained, when the coefficient of variation is 0.05% or more and 0.5% or less.

In the case of producing a pressure vessel by FW molding, the stress tends to concentrate at a portion having the lowest mass per unit length (g/m) among portions varying in stress load to cause the start of fracture therefrom, even if the carbon fibers have the same strand strength. Therefore, when the coefficient of variation of the mass per unit length of the carbon fiber bundle is high, the amount of the carbon fiber bundle to be used has to be increased based on the expected strength transition rate, even if the carbon fiber bundle has a high average strand strength. Accordingly, in cases where the carbon fiber bundle is used for producing a pressure vessel, for example, it leads to an increase in the mass of the resulting tank. However, the amount of the carbon fiber bundle to be used can be reduced by reducing the coefficient of variation of the mass per unit length of the carbon fiber bundle, making it possible to achieve a reduction in the weight of the resulting composite material.

When the coefficient of variation of the mass per unit length of the carbon fiber bundle is 0.5% or less, a good composite material having a small locational variation in tensile strength can be obtained, in the case of producing a composite material using the carbon fiber bundle, making it possible to reduce the amount of the carbon fiber bundle to be used. The parameters regarding the mass per unit length (g/m) of the carbon fiber bundle, namely, the mass per unit length (g/m) of the carbon fiber bundle, and the coefficient of variation of the mass per unit length of the carbon fiber bundle, can be controlled by using the method of producing the carbon fiber bundle according to the present invention, to be described later.

In the carbon fiber bundle according to the present invention, the number of fuzzes per meter of the carbon fiber bundle during the unwinding of the carbon fiber bundle is preferably 1.5 or less, more preferably 1.0 or less, and still more preferably 0.5 or less. In the case of producing a pressure vessel by FW molding, frictions with eyelets and metal bars present in the production process cause fuzz generation. If the molding is performed in a state containing the thus generated fuzzes or accumulated fuzzes, portions containing such fuzzes become the starting points of fracture, resulting in a burst pressure lower than expected. A composite material having a good tensile strength can be obtained by reducing fuzz generation in the production process. The number of fuzzes during the unwinding of the carbon fiber bundle can be controlled by using the method of producing the carbon fiber bundle according to the present invention, to be described later. The lower limit of the number of fuzzes per meter of the carbon fiber bundle is ideally 0.0. However, no practical problem arises even if the lower limit is about 0.1.

The carbon fiber bundle according to the present invention preferably has an average single-fiber diameter d ($\mu$m) of 6.0 $\mu$m or more, and more preferably 6.5 $\mu$m or more. Since the impregnating property depends on the single-fiber diameter in the case of producing a composite material by the FW method or by forming a towpreg, having a large single-fiber diameter makes it possible to efficiently produce a composite material. When the average single-fiber diameter d is 6.0 $\mu$m or more, it is satisfactory from the viewpoint of the impregnating property. The upper limit of the average single-fiber diameter d is not particularly limited. However, a larger single-fiber diameter leads to a more marked deterioration of the double structure formed in the stabilization step. Accordingly, the average single-fiber diameter d is preferably less than 8.0 $\mu$m.

In the carbon fiber bundle according to the present invention, the blackening thickness K in a cross-section of a single fiber is preferably 0.38 times the average single-fiber diameter d described above or more, namely, 0.38 $\times$ d or more, and more preferably 0.39 $\times$ d or more. A blackening layer present at the outer peripheral portion of a single carbon fiber in a cross-section perpendicular to the fiber axial direction, is a region having a high orientation parameter of the crystal region, and a high tensile modulus. The larger the blackening thickness K described above can be made, the easier it is to reduce the difference between skin-core structure in the case of increasing the average single fiber fineness. Since the strand strength and the strand modulus of the carbon fibers are improved when the difference between skin-core structure is reduced, having a large blackening thickness K makes it possible to improve the quality of the carbon fibers.

When the blackening thickness K is 0.38 $\times$ d or more, uniform carbon fibers in which the arial proportion of the blackening layer in a cross-section of a single fiber is 94% or more can be obtained, and it is satisfactory from the viewpoint of the quality. The upper limit of the value of K as described above is 0.5 $\times$ d, at which the entire cross-section of the single fiber becomes the blackening layer, but it is satisfactory to set $0.45 \times d$ as the upper limit.

The carbon fiber bundle according to the present invention preferably has an orientation parameter of crystallites, $\Pi$, of 79.5% or more, and more preferably 80.0% or more. The strand modulus of the carbon fibers can be improved by increasing the orientation parameter of crystallites in the carbon fiber bundle. When the orientation parameter of crystallites, $\Pi$, is 79.5% or more, the strand modulus is satisfactory from the viewpoint of the quality. The upper limit of the orientation parameter of crystallites is not particularly limited. However, it is practical to set the upper limit to 84% or less, from the viewpoint of the balance between the production cost and the performance.

Such parameters can be controlled by using the method of producing the carbon fiber bundle according to the present invention, to be described later.

The carbon fiber bundle according to the present invention preferably has an average single-fiber diameter d ($\mu$m) of 6.0 or more and less than 8.0, a blackening thickness K in a cross-section of a single fiber of $0.38 \times d$ or more, and an orientation parameter of crystallites, $\Pi$, of 79.5% or more. A composite material having a particularly excellent tensile strength can be obtained, by simultaneously satisfying the requirements of these three parameters.

In the carbon fiber bundle according to the present invention, when the ratio ($R_i/R_o$) of the crystallinity $R_i$ of an inner layer to the crystallinity $R_o$ of an outer layer, of a single fiber, as determined by Raman spectroscopy, is defined as $R_r$, (hereinafter, also referred to as "ratio of crystallinity $R_r$ between the inner and outer layers"), the value of $R_r$ is preferably 1.03 or less, and more preferably 1.01 or less. The ratio of crystallinity $R_r$ between the inner and outer layers is an index indicating the degree of distribution of the crystallinity in the region within the single-fiber diameter. The more uniform the crystallinity in a cross-section, the smaller the value of $R_r$; whereas the less uniform the crystallinity, the larger the value. When the value of the ratio of crystallinity $R_r$ between the inner and outer layers is small, it is possible to obtain carbon fibers in which the region within the single-fiber diameter is more uniform as compared to conventional carbon fibers, and in which the tensile stress is less likely to be concentrated at the fiber surface, making it possible to improve the strand strength. When the ratio of crystallinity $R_r$ between the inner and outer layers is more than 1.03, there is a risk that the concentration of stress occurs in the surface layer, possibly leading to a decrease in the quality of the carbon fibers. The lower limit of the value of $R_r$ is preferably set to 1.00 or more.

Any means can be used as a means for achieving the above-described ratio of crystallinity $R_r$ between the inner and outer layers of the carbon fiber bundle, as long as the ratio within the numerical range described above can be achieved. In particular, however, a method is preferably used in which the initial stage of the stabilization step, along with the stretching at a low ratio in the spinning step and the stretching at a high ratio in the carbonization step, are performed at a low temperature.

Since the stability of the mass per unit length (g/m) of the carbon fiber bundle is excellent in the carbon fiber bundle according to the present invention, it is possible to obtain a carbon fiber-reinforced composite material having a high tensile strength, when the carbon fiber bundle is subjected to the molding of the composite material. Further, a carbon fiber-reinforced composite material having a high tensile strength and a small variation in the mass per unit length (g/m) can be more easily obtained, by using the carbon fiber bundle according to the present invention.

Next, the method of producing a carbon fiber bundle suitable for obtaining the carbon fiber bundle according to the present invention will be described more specifically, with reference to examples.

A polyacrylonitrile copolymer is preferably used as a raw material to be used in the production of a carbon fiber precursor fiber bundle. In the present invention, the "polyacrylonitrile copolymer" refers to a polymer containing acrylonitrile as a main component of the polymer units. The term "main component" refers to a component that accounts for 90 to 100% by mass of the polymer units. In the production of a carbon fiber precursor fiber bundle, the polyacrylonitrile copolymer preferably contains a copolymerization component, from the viewpoints of allowing the stabilization step to be described later to proceed smoothly, controlling the carbon fibers to have a high quality, and the like.

A monomer containing one or more carboxylic acid groups or amide groups is preferably used as the monomer which can be used as a copolymerization component, from the viewpoint of accelerating stabilization. Examples of the monomer containing a carboxylic acid group(s) include: acrylic acid, methacrylic acid and itaconic acid; and alkali metal salts thereof, and ammonium salts thereof. Examples of the monomer containing an amide group(s) include acrylamide.

In the production of a carbon fiber precursor fiber bundle, the method of producing the polyacrylonitrile copolymer can selected from known polymerization methods.

Either dry-jet wet spinning or wet spinning may be used as a spinning method at the time of producing the carbon fiber precursor fiber bundle. However, it is preferred to use dry-jet wet spinning which is advantageous for improving the knot strength of the resulting carbon fiber bundle. The spinning step includes: an extrusion step of extruding a spinning dope solution through a spinneret into a coagulation bath by dry-jet wet spinning; a water washing step of washing the fibers obtained in the extrusion step in a water bath; a water bath stretching step of stretching the fibers obtained in the water washing step in the water bath; and a dry heat treatment step of subjecting the fibers obtained in the water bath stretching step to a dry heat treatment. If necessary, the spinning step may include a steam stretching step of steam stretching the fibers obtained in the dry heat treatment step. Further, the spinning step preferably includes a gathering step, as necessary, so that the number of filaments in the precursor fiber bundle matches that in the carbon fiber bundle. It is also possible to change the order of the respective steps, as appropriate.

The spinning dope solution is a solution obtained by dissolving the polyacrylonitrile copolymer described above in a solvent capable of dissolving polyacrylonitrile, such as dimethyl sulfoxide, dimethylformamide or dimethylacetamide.

The coagulation bath preferably contains a solvent used as the solvent in the spinning dope solution, such as dimethyl sulfoxide, dimethylformamide or dimethylacetamide, and a coagulant. As the coagulant, it is possible to use one which does not dissolve the above-described polyacrylonitrile copolymer, and which is compatible with the solvent used in the spinning solution. Specifically, it is preferred to use water as the coagulant.

As the water washing bath in the water washing step described above, it is preferred to use a water washing bath composed of a plurality of stages controlled to temperatures of from 30 to 98°C.

Further, the stretch ratio in the water bath stretching step is preferably from 2 to 6 times.

After the water bath stretching step, it is preferred to impart an oil agent composed of silicone to the fiber bundle, for the purpose of preventing the adhesion between single fibers. A modified silicone is preferably used as such a silicone oil agent, and one containing an amino-modified silicone having a high heat resistance is preferably used.

A known method can be used in the dry heat treatment step. The dry heat treatment may be carried out, for example, at a drying temperature of from 100 to 200°C.

A carbon fiber precursor fiber bundle suitable for obtaining the carbon fiber bundle according to the present invention can be obtained, by performing the water washing step, the water bath stretching step, the oil agent application step and the dry heat treatment step as described above. While there is no problem to perform steam stretching after the dry heat treatment step, a variation in the mass per unit length (g/m) of the carbon fiber precursor fiber bundle may occur.

The number of filaments in the carbon fiber precursor fiber bundle is preferably 6,000 or more, and more preferably 12,000 or more, so that the number matches the number of filaments in the carbon fiber bundle. The upper limit of the number of filaments is not particularly limited, but is preferably 36,000 or less. When the number of filaments in the carbon fiber precursor fiber bundle matches that in the carbon fiber bundle, voids between the single fibers in the carbon fiber bundle, namely, so-called bundle splitting is more likely to be prevented, and the larger the number of filaments in the carbon fiber precursor fiber bundle is, the more easily the variation in the physical properties of the carbon fiber bundle can be reduced. Therefore, it is preferred to use a spinneret in which the number of spinneret holes is 6,000 or less, for example, a spinneret in which the number of spinneret holes is from 300 to 6,000, and to gather the carbon fiber precursor fiber bundle so that the number of filaments in the carbon fiber bundle is within the range of from 6,000 to 36,000.

The carbon fiber precursor fiber bundle preferably has a single fiber fineness of from 1.4 to 3.4 dtex, and more preferably from 1.9 to 2.8 dtex, from the viewpoint of increasing the strand strength and the strand modulus. When the single fiber fineness is 1.4 dtex or more, it is satisfactory from the viewpoint of the productivity. The upper limit of the single fiber fineness is not particularly limited. However, a higher single fiber fineness makes it more difficult to control the difference between skin-core structure in the stabilization step, and thus, a decrease in the quality of the carbon fibers is more likely to occur. Therefore, the single fiber fineness is preferably 3.4 dtex or less.

Further, the orientation parameter of crystallites of the carbon fiber precursor fiber bundle is preferably from 70.0 to 87.0%. The lower limit thereof is more preferably 80% or more. The lower the orientation parameter of crystallites of the carbon fiber precursor fiber bundle, the more the stretchability in the stabilization step can be increased. Therefore, when the orientation parameter of crystallites of the carbon fiber precursor fiber bundle is 87.0% or less, the fiber bundle can be sufficiently stretched in the stabilization step, making it possible to improve the tensile modulus of the resulting carbon fiber bundle, and to reduce the variation in the mass per unit length (g/m) of the carbon fiber bundle. The orientation parameter of crystallites of the carbon fiber precursor fiber bundle is more preferably 85.0% or less. When the orientation parameter of crystallites of the carbon fiber precursor fiber bundle is less than 70%, the resulting carbon fibers may have a low orientation parameter, possibly leading to a decrease in the tensile modulus.

Any means can be used as a means for achieving the above-described orientation parameter of crystallites of the carbon fiber bundle, as long as the ratio within the numerical range described above can be achieved. **In** particular, however, it is preferred to perform the water bath stretching alone without performing the steam stretching, in the production of the carbon fiber precursor fiber bundle.

**In** the method of producing the carbon fiber bundle, the carbon fiber bundle is obtained by subjecting a carbon fiber precursor fiber bundle to a stabilization step, a pre-carbonization step, and a carbonization step.

To increase the strand strength and the strand modulus of the carbon fibers, and to reduce the variation in the mass per unit length (g/m) of the carbon fiber bundle, it is good to control the stabilization treatment while stretching the carbon fiber precursor fiber bundle, preferably at a stretch ratio of from 1.30 to 3.00, when subjecting the precursor fiber bundle to the stabilization step. The stretch ratio is more preferably from 1.60 to 2.40. By performing stretching in the stabilization step, the precursor fiber bundle is stretched at a low ratio of 3 times or less over a long period of time from 5 seconds to 1,200 seconds. Therefore, the stretching can be performed for a sufficiently long time, making the variation in the mass per unit length (g/m) less likely to increase. In the present invention, the stretch ratio in the stabilization step refers to the ratio of the speed of the stabilized carbon fiber bundle after the final oxidation oven with respect to the speed of the carbon fiber precursor bundle before the first oxidation oven. In cases where plurality of oxidation ovens are used, the stretch ratio can be divided and assigned to the respective ovens. However, it is preferred to perform stretching in the first oxidation oven, in order to balance with the control of the difference between skin-core structure. Further, in cases where the stretch ratio can be divided and assigned to a plurality of fiber paths of the oxidation oven, it is preferred to perform stretching in the first path, and it is more preferred to achieve at least 80% or more of the stretch ratio in the first path.

When the carbon fiber precursor fiber bundle is subjected to the stabilization step, it is desirable to control such that the ratio of the peak intensity at 1,453 cm$^{-1}$ to the peak intensity at 1,370 cm$^{-1}$ in an infrared spectrum ([peak intensity at 1,453 cm$^{-1}$] / [peak intensity at 1,370 cm$^{-1}$]; this peak intensity ratio is referred to as "IR peak intensity ratio A" for convenience) of the resulting stabilized fibers, is within the range of from 0.60 to 0.65, and the ratio of the peak intensity at 1,254 cm$^{-1}$ to the peak intensity at 1,370 cm$^{-1}$ in the infrared spectrum ([peak intensity at 1,254 cm$^{-1}$] / [peak intensity at 1,370 cm$^{-1}$]; this peak intensity ratio is referred to as "IR peak intensity ratio B" for convenience) of the resulting stabilized fibers, is within the range of from 0.70 to 0.80, in order to increase the strand strength and the strand modulus of the carbon fibers.

The peak at 1,453 cm$^{-1}$ in the infrared spectrum is derived from an alkene, and decreases as the stabilization proceeds. The peak at 1,370 cm$^{-1}$ and the peak at 1,254 cm$^{-1}$ are peaks derived from the stabilized structures (thought to be a naphthyridine ring structure and a hydrogenated naphthyridine ring structure, respectively), and increase as the stabilization proceeds. In the stabilization step, in general, peaks derived from polyacrylonitrile are reduced as much as possible so as to increase the carbonization yield. In the present invention, however, the conditions for the stabilization step are set to intentionally leave a large number of alkenes. The carbon fiber bundle according to the present invention can be obtained by subjecting a stabilized fiber bundle having such a structure to the pre-carbonization step.

Further, it is important to set the stabilization conditions such that the IR peak intensity ratio B is within the range of from 0.70 to 0.80. The peak at 1,254 cm$^{-1}$ is often observed at portions where the fiber bundle is insufficiently stabilized, and the fracture toughness tends to decrease when there are a large number of such structures. The above-described peak intensity ratio decreases as the stabilization proceeds, and decreases largely particularly in the initial stage. Depending on the stabilization conditions, there are cases where the peak intensity ratio does not decrease to 0.80 or less, even if the time is extended.

To control both of these two peak intensity ratios within the intended ranges, the conditions can be set focusing mainly on: decreasing the amount of the copolymerization component contained in the polyacrylonitrile copolymer that constitutes the carbon fiber precursor fiber bundle; decreasing the fineness of the carbon fiber precursor fiber bundle; and increasing the stabilization temperature in the latter stage.

Specifically, it is desirable that the carbon fiber precursor fiber bundle be heat-treated until the IR peak intensity ratio A is within the range of from 0.74 to 0.80 (first stabilization step), and subsequently, the fiber bundle be heat-treated, preferably at a temperature higher than that in the first stabilization step, until the IR peak intensity ratio A is within the range of from 0.60 to 0.65, and until the IR peak intensity ratio B is within the range of from 0.70 to 0.80, for a stabilization time of from 5 to 25 minutes, preferably from 5 to 15 minutes (second stabilization step). The stabilization temperature can be set to a higher temperature in order to decrease the stabilization time in the second stabilization step. However, an appropriate stabilization temperature varies depending on the properties of the carbon fiber precursor fiber bundle. It is preferred to set the core temperature of the carbon fiber precursor fiber bundle within the range of from 250 to 300°C, more preferably from 250 to 280°C, and still more preferably from 250 to 270°C, in order to control the peak intensity ratios within the above-described ranges in the infrared spectrum.

The stabilization temperature need not be constant, and multi-step temperature setting can be used without any problem. In cases where three or more oxidation ovens are used, performing the treatment in the second and subsequent oxidation ovens is referred to as the second stabilization step. In the present invention, the number of oxidation ovens for performing the second stabilization step is not limited. To increase the knot strength of the resulting carbon fiber bundle, it is preferred to use a higher stabilization temperature and a shorter stabilization time. In the first stabilization step, the stabilization time is preferably from 20 to 50 minutes, more preferably from 30 to 40 minutes, and it is preferred to perform stabilization at a stabilization temperature that allows the peak intensity ratios to be within the above-described ranges.

The "stabilization time" as described herein refers to the period of time during which the fiber bundle resides in an oxidation oven, and the "stabilized fiber bundle" refers to the fiber bundle after being subjected to the stabilization step and before being subjected to the pre-carbonization step. Further, the "peak intensity" as described herein refers to the absorbance at each wavelength obtained by sampling a small amount of the stabilized fibers, measuring the infrared spectrum of the fibers, and performing baseline correction on the resulting infrared spectrum. At this time, the infrared spectrum is not subjected to peak splitting and the like. The sample is diluted with potassium bromide (KBr) to a concentration 0.67% by mass before the measurement. As described above, the stabilization conditions can be examined in accordance with the preferred production method to be described later, by measuring the infrared spectrum every time the condition settings are changed. The difference between skin-core structure and the fracture toughness of the resulting carbon fiber bundle can be controlled, by appropriately controlling the peak intensity ratios in the infrared spectrum of the stabilized fibers.

In the present invention, the stabilization step refers to subjecting a carbon fiber precursor fiber bundle to a heat treatment at a temperature of from 200 to 300°C in an atmosphere containing oxygen.

The total treatment time in the stabilization step can be selected as appropriate, preferably within the range of from 35 to 60 minutes. The total treatment time is more preferably selected within the range of from 35 to 55 minutes.

In the pre-carbonization step of pre-carbonizing the fiber bundle obtained in the stabilization step, the resulting stabilized fibers are preferably heat-treated in an inert atmosphere at a maximum temperature of from 500 to 1,000°C. The stretch ratio in the pre-carbonization step is preferably from 1.00 to 1.20, and more preferably from 1.03 to 1.10. In the temperature region as described above, microstructural flaws due to stretching are less likely to occur. When the stretch ratio in the pre-carbonization step is 1.00 or more, it is possible to accelerate the reaction to form the initial structure of carbonization between the molecules in the interior of the fibers, and to form a dense fiber structure. As a result, the knot strength of the carbon fiber bundle can be increased. When the stretch ratio in the pre-carbonization step is more than 1.20, a high tension is applied to the pre-carbonized fiber bundle, possibly resulting in fuzz generation.

The fiber bundle obtained through the pre-carbonization step preferably has a specific gravity of from 1.5 to 1.8.

The pre-carbonized fiber bundle is carbonized in an inert atmosphere, at a maximum temperature of from 1,000 to 2,000°C. The maximum temperature in the carbonization step is the higher the more preferred from the viewpoint of increasing the strand modulus, but too high a temperature may cause a decrease in the knot strength. Therefore, it is good to set the maximum temperature taking both properties into consideration. The maximum temperature is more preferably from 1,100 to 1,800°C, and still more preferably from 1,200 to 1,600°C.

The carbon fiber bundle obtained as described above is preferably subjected to an electrochemical treatment of fiber surface. When the carbon fiber bundle is subjected to an electrochemical treatment of fiber surface, an oxygen-containing functional group is introduced into the carbon fiber bundle. Gas phase oxidation, liquid phase oxidation and liquid phase electrolytic oxidation are used for the electrochemical treatment of fiber surface in the present invention. However, liquid phase electrolytic oxidation is preferably used, from the viewpoints that a high productivity can be achieved and that a uniform treatment can be performed. **In** the present invention, liquid phase electrolytic oxidation can be performed by a known method, without particular limitation.

After the electrolytic treatment described above, the resulting carbon fiber bundle can also be subjected to a sizing treatment, in order to impart convergency to the fiber bundle. As the sizing agent, a sizing agent having a good compatibility with a matrix resin can be selected as appropriate, depending on the type of the matrix resin to be used in the composite material. The amount of the sizing agent is preferably 0.2% by mass or more and 1.0% by mass or less.

A known method can be used for the production process of a towpreg using the carbon fiber bundle according to the present invention. For example, a towpreg can be obtained by applying an epoxy resin composition adjusted to a temperature of from 20 to 60°C on one surface of the carbon fiber bundle, using an apparatus for producing a towpreg including a creel, a kiss roll, nip rolls and a winder, and then passing the carbon fiber bundle through the nip rolls to impregnate the epoxy resin composition into the interior of the carbon fiber bundle. At this time, as a towpreg bobbin, 2,300 m of a towpreg can be wound with an initial tension of from 600 to 1,000 gf and a winding ratio of from 6 to 10, on a paper tube so as to form a cylindrical shape with a winding width of from 230 to 260 mm.

Further, a known method can be used for the production process of a carbon fiber-reinforced composite material using the towpreg. For example, a pressure vessel can be produced, for example, by the following method. Specifically, a 7.5 L-liner made of polyethylene is installed to a filament winding molding device, and the towpreg is wound around the entire liner. A hoop layer arranged at an angle of +89° with respect to the axial direction of the liner and a hoop layer arranged at an angle of -89° with respect to the axial direction of the liner are wound around the liner to a thickness of 1.4 mm, as the first layer. Subsequently, a helical layer arranged at an angle of +20° with respect to the axial direction of the liner and a helical layer arranged at an angle of -20° with respect to the axial direction of the liner are wound around the liner to a thickness of 2.2 mm, as the second layer. Further, a hoop layer arranged at an angle of +89° with respect to the axial direction of the liner and a hoop layer arranged at an angle of -89° with respect to the axial direction of the liner are wound around the liner to a thickness of 0.6 mm, as the third layer, thereby obtaining an intermediate. The above-obtained intermediate can be cured, for example, by a method in which the intermediate is cured in a curing oven at 150°C for 4 hours while rotating the intermediate, to obtain the pressure vessel.

Methods of measuring various physical property values used in the present invention are as follows.

< Strand Tensile Test of Carbon Fiber Bundle >

The strand strength, the strand modulus and the elongation were measured in accordance with the resin-impregnated strand test method described in JIS R7608: 2004, by the following procedure. A mixed resin containing "CELLOXIDE" (registered trademark) 2021P (manufactured by Daicel Corporation) / boron trifluoride monoethylamine (manufactured by Tokyo Chemical Industry Co., Ltd.) / acetone at a ratio of 100/3/4 (parts by mass) is used, and the resin is cured under the conditions of normal pressure, a temperature of 125°C and a period of time of 30 minutes. Seven strands of carbon fibers were measured, and the respective mean values of the measured values are defined as the strand strength, the strand modulus and the elongation. The strain at the time of calculating the strand modulus is set within the range of from 0.1 to 0.6%.

< Average Single-fiber diameter d of Carbon Fiber Bundle >

The mass per unit length $A_f$ (g/m) and the density $B_f$ (g/cm$^3$) are determined for the carbon fiber bundle to be measured which is composed of a number of carbon fiber filaments. The number of filaments of the carbon fiber bundle to be measured is defined as $C_f$, and the average single-fiber diameter d ($\mu$m) of the carbon fibers is calculated by the following Equation.

$$\text{Average single-fiber diameter d (}\mu\text{m) of carbon fiber} = (1/\pi \times (A_f/(B_f/C_f)))^{(1/2)} \times 2 \times 10^3.$$

< Blackening Thickness K and Ratio of Blackening layer at Outer Peripheral Portion of Single Carbon Fiber in Cross-section Perpendicular to Fiber Axial Direction >

The carbon fiber bundle to be measured is embedded in a resin, a cross-section perpendicular to the fiber axial direction of the resin-embedded bundle is polished, and the cross-section is observed at a total magnification of 1,000 times using a 100x objective lens of a light microscope. The blackening thickness is measured in a microscopic image of the cross-section of the polished face. The analysis is carried out using image analysis software, ImageJ. First, the cross-sectional image of a single fiber is divided into black and white regions by binarization. The brightness distribution in the cross-section of the single fiber is binarized, setting the mean value of the brightness distribution as a threshold value. In the resulting binarized image, the shortest distance from one point in the surface layer to a region of transition from black to white, in the direction of the fiber diameter, is measured. The measurement described above is carried out for five points in the region inside the perimeter of the same single fiber, and the mean value of the measured values is calculated as the blackening thickness K at the corresponding level. Further, the ratio of blackening layer (%), which is the ratio of the area of the portion corresponding to the blackening thickness with respect to the area of the entire cross-section perpendicular to the fiber axial direction of the single carbon fiber, is calculated by image analysis.

< Coefficient of Variation of Mass per Unit Length of Carbon Fiber Bundle (%) >

The coefficient of variation (%) of the mass per unit length (g/m) of the carbon fiber bundle, is measured as follows, where coefficient of variation (%) is represented by the ratio of the standard deviation to the mean value (namely, [standard deviation] / [mean value] $\times$ 100 (%)). The operation of cutting the carbon fiber bundle at a length of 1 m is repeated to prepare 10 samples of the carbon fiber bundle. The mass (g) of each sample of the carbon fiber bundle is measured to determine the mass per unit length (g/m). Subsequently, the mean value and the standard deviation of the measured values of the mass per unit length of the total 10 samples are determined, and the ratio of the standard deviation to the mean value is determined, as a value represented by percentage ([standard deviation] / [mean value] $\times$ 100 (%)).

< Orientation Parameter of Crystallites (%) of Carbon Fiber Precursor Fiber Bundle and Carbon Fiber Bundle >

The orientation parameter of crystallites is measured as follows. The fiber bundle is cut into a length of 40 mm, and 20 mg of the cut fiber bundles are precisely weighed to collect samples. After aligning the samples such that the fiber axes thereof are accurately horizontal, the samples are arranged into a sample fiber bundle having a width of 1 mm and a uniform thickness, using a fixture for sample adjustment. The resulting sample fiber bundle is impregnated with a thin collodion solution to fix the fiber bundle so that the form thereof can be prevented from collapsing, and then fixed on the sample stage of a wide-angle x-ray diffraction meter (XRD-6100; manufactured by Shimadzu Corporation). Using a Cu K$\alpha$ radiation monochromatized with a Ni filter as the X-ray source, the orientation parameter of crystallites (%) is determined by the equation shown below. In a carbon fiber precursor fiber bundle, the half-value width (H°) of the spread of the profile in the meridian direction including the maximum diffraction intensity observed in the vicinity of $2\theta = 17°$ is used. In the carbon fiber bundle, on the other hand, the half-value width (H°) of the spread of the profile in the meridian direction including the maximum diffraction intensity observed in the vicinity of $2\theta = 25$ to $26°$ is used.

$$\text{Orientation parameter of crystallites (\%)} = [(180 - H) / 180] \times 100$$

In the above equation, H represents the half-value width described above.

< Ratio Rr (Ratio of Crystallinity Rr between Inner and Outer Layers) of Crystallinity Ri of Inner layer to Crystallinity Ro of Outer layer, of Single Carbon Fiber, as Determined by Raman Spectroscopy >

The method of measuring the crystallinity distribution by Raman spectroscopy is as follows. Carbon fibers were embedded in an epoxy resin, the resin-embedded fibers were then wet-polished, and the polished face was observed. The spot diameter of the Raman microprobe used was about 1 $\mu$m, and the resin-embedded carbon fibers were polished in a tilted manner in order to further increase the positional resolution. The tilt angle of the polished face is 3° with respect to the fiber axis. Since the carbon fiber bundle was polished in a tilted manner, the depth from the surface corresponding to the measured position is determined as follows. In cases where the cross-section orthogonal to the fiber axis of each carbon fiber is circular, the shape of each fiber in the polished face is elliptic.

$$\text{Measured depth} = \sin\theta \times e$$

In the above equation, e represents the distance from the end in the long axis of the carbon fiber face obtained by polishing, and $\theta$ represents the tilt angle of the fibers. When a and b are respectively taken as the length of the long axis and the length of the short axis in the carbon fiber face obtained by polishing, it can be expressed as $\sin\theta = b/a$. The length a of the long axis in the carbon fiber face obtained by polishing refers to the length of the long side of a rectangle that circumscribes the carbon fiber face obtained by polishing and that has the minimum area, and the length b of the short axis refers to the length of the short side of the rectangle that circumscribes the carbon fiber face. In cases where the cross-section orthogonal to the fiber axis of each carbon fiber is not circular, the depth from the surface corresponding to the measured position is determined as follows.

$$\text{Measured depth} = e \times c/a$$

In the above equation, a and c respectively represent the length of the long axis and the length of the short axis, in the carbon fiber face obtained by embedding the carbon fibers in an epoxy resin perpendicular to the polished face, followed by wet polishing. The length a of the long axis in the carbon fiber face obtained by polishing refers to the length of the long side of a rectangle that circumscribes the carbon fiber face obtained by polishing and that has the minimum area, and the length b of the short axis refers to the length of the short side of the rectangle that circumscribes the carbon fiber face.

Further, the following intensities are obtained as the parameters of Raman bands, and the ratio $I_{1480}/I_{1580}$ is defined as the parameter of crystallinity. $I_{1350}$, $I_{1480}$ and $I_{1580}$ respectively represents the following:

$I_{1350}$: Raman band intensity in the vicinity of 1,350 cm$^{-1}$;
$I_{1580}$: Raman band intensity in the vicinity of 1,580 cm$^{-1}$; and
$I_{1480}$: the intensity of the valley (approximately in the vicinity of 1,480 cm$^{-1}$) between two Raman bands in the vicinity of 1,580 cm$^{-1}$ and the vicinity of 1,350 cm$^{-1}$.

The ratio of crystallinity Rr between the inner and outer layers is determined as follows.
In a cross-section of a single fiber, the ratio $I_{1480}/I_{1580}$ in a region at a depth from the surface of from 0.5 to 2.0 $\mu$m, is defined as Ro, and the ratio $I_{1480}/I_{1580}$ in a region at a distance from the center of the cross-section of a single fiber within 0.5 $\mu$m is defined as Ri, and the value of Rr is determined by the following equation.

$$Rr = Ri/Ro.$$

In the measurement of Raman band intensity, both ends of the measurement range of the resulting chart are connected with a straight line, the background is subtracted, and then peak fitting is performed such that the peaks appear within the range of $\pm 50$ cm$^{-1}$ of 1,350 cm$^{-1}$ and 1,580 cm$^{-1}$ with the two peak wavenumbers set as reference wavenumbers, to determine the peak intensity of each peak. The Voigt Function was used as the peak fitting function. In addition, the intensity of the valley between both peaks is determined. The measurement is performed once for each of five individual single fibers within the same carbon fiber bundle, and the simple average of the measured values is used. A laser Raman spectrophotometer (NRS-3200, manufactured by JASCO Corporation) is used as the measuring apparatus, using a 100x objective lens. The measurement is performed under the conditions of a beam diameter of 1 $\mu$m, a laser power of from 2.5 to 3.2 mW, a wavelength of 532 nm, a measurement time of 120 seconds, and a measurement range of from 1,200 to 1,900 cm$^{-1}$.

< Number of fuzzes During Unwinding of Carbon Fiber Bundle >

A bobbin of the carbon fiber bundle is set to a creel, and the fiber bundle is taken up by a roller at 5 m/min under a tension of 1.6 mN/dtex and wound by a winder. At this time, the number of fuzzes generated between the creel and the roller is counted for one minute.

Number of fuzzes during unwinding of carbon fiber bundle (number/m) = counted number of fuzzes (number)/5 (m).

< Intensity Ratio in Infrared Spectrum >

The ratio (IR peak intensity ratio A) of the peak intensity at 1,453 $cm^{-1}$ to the peak intensity at 1,370 $cm^{-1}$ in an infrared spectrum, and the ratio (IR peak intensity ratio B) of the peak intensity at 1,254 $cm^{-1}$ to the peak intensity at 1,370 $cm^{-1}$ in the infrared spectrum, are measured by the following method.

After freezing and crushing the stabilized fibers to be subjected to the measurement, 2 mg of the crushed fibers were precisely weighed and collected. The collected crushed fibers are mixed thoroughly with 300 mg of potassium bromide (KBr), and the resulting mixture was placed in a fixture for molding, and pressed using a press machine at 40 MPa for 2 minutes, to prepare a tablet for measurement. The resulting tablet is set in a Fourier transform infrared spectrophotometer, and the spectrum in the range of from 1,000 to 2,000 $cm^{-1}$ is measured. Background correction is performed such that the minimum value in the range of from 1,700 to 2,000 $cm^{-1}$ is 0, by subtracting the minimum value from each intensity. Paragon 1000, manufactured by PerkinElmer Inc., is used as the Fourier transform infrared spectrophotometer described above.

< Method of Evaluating Spreadability (Spreadability Evaluation) >

Two metal bars (made of stainless steel), each having a diameter of 50 mm and a surface roughness Rmax of 0.3 $\mu$m, are arranged in the vertical direction at an interval of 150 mm such that the carbon fiber bundle passes through the metal bars while being brought into contact with each bar at an angle of 0.3925 $\pi$ (rad) $\pm$ 0.04 $\pi$ (rad), 0.785 $\pi$ (rad) in total. The carbon fiber bundle is placed through the two metal bars, the unwinding tension from the package is set to 800 g, and the carbon fiber bundle is pulled by a drive roll at a rate of 4 m/min to pass through the metal bars. A CCD transmission type laser sensor/ IG1500 manufactured by KEYENCE corporation is installed at a location 15 mm after passing the second metal bar, the width of the carbon fiber bundle is measured at 120 points, continuously for 120 seconds at intervals of one second, and the coefficient of variation ([standard deviation] / [mean value] $\times$ 100 (%)) thereof is defined as the spreadability.

In the present invention, the preferred range of the spreading width is evaluated in four stages, in accordance with the following criteria.

S: The coefficient of variation is less than 0.5%.
A: The coefficient of variation is 0.5% or more and less than 1.0%
B: The coefficient of variation is 1.0% or more and less than 5%.
C: The coefficient of variation is 5% or more.

< Processability of Carbon Fiber Bundle (Processability (fuzz)) >

Two metal bars (made of stainless steel), each having a diameter of 50 mm and a surface roughness Rmax of 0.3 $\mu$m, were arranged in the vertical direction at an interval of 150 mm such that the carbon fiber bundle passes through the metal bars while being brought into contact with each bar at an angle of 0.3925 $\pi$ (rad) $\pm$ 0.04 $\pi$ (rad), 0.785 $\pi$ (rad) in total. The carbon fiber bundle is placed through the two metal bars, the unwinding tension from the package is set to 800 g, and the carbon fiber bundle is pulled by a drive roll at a rate of 4 m/min to pass through the metal bars. The number of fuzzes per minute after passing the second metal bar was counted, the counted number is converted in terms of the value per meter by the following equation, and the resulting value is defined as the processability. The processability of the carbon fiber bundle is measured three times, and the arithmetic mean value of the measured values is defined as the number of fuzzes during process (number/m) of the carbon fiber bundle.

Number of fuzzes during process (number/m) of carbon fiber bundle = Counted number of fuzzes (number)/4 (m)

S: The number of fuzzes during process is 2.5/m or less.
A: The number of fuzzes during process is more than 2.5/m and 3.5/m or less.
B: The number of fuzzes during process is more than 3.5/m and 5.0/m or less.
C: The number of fuzzes during process is more than 5.0/m.

Examples

(Example 1)

A copolymer composed of 99.5 mol% of acrylonitrile and 0.5 mol% of itaconic acid was polymerized by the solution polymerization method, using dimethyl sulfoxide as a solvent, to obtain a spinning solution containing a polyacrylonitrile copolymer. Coagulated fibers were obtained by the dry-jet wet spinning method in which the resulting spinning solution is extruded once into the air through a spinneret, and then introduced into a coagulation bath composed of a 35% by mass aqueous solution of dimethyl sulfoxide whose temperature was controlled to 3°C.

The thus obtained coagulated fibers were washed with water in a conventional manner, and subjected to water bath stretching at a stretch ratio of 3.5 times. Subsequently, an amino-modified silicone-based silicone oil agent was applied to the resulting fiber bundle after the water bath stretching, and the fiber bundle was subjected to a dry densification treatment using a heat roller controlled to 160°C. A carbon fiber precursor fiber bundle in which the number of filaments is 12,000 was obtained, with the total stretch ratio during spinning set to 3.5 times. The resulting carbon fiber precursor fiber bundle had a single fiber fineness of 2.1 dtex, and an orientation parameter of crystallites of 84.0%.

Subsequently, the carbon fiber precursor fiber bundle was subjected to the first stabilization step in which the fiber bundle was stabilized in an oven in an air atmosphere under the conditions of a stabilization temperature of 240°C and a stabilization time of 29 minutes, while stretching the fiber bundle at a stretch ratio of 1.6, and then subjected to the second stabilization step in which the fiber bundle was stabilized in the oven under the conditions of a stabilization temperature of 263°C and a stabilization time of 14 minutes, while stretching the fiber bundle at a stretch ratio of 1.0, to obtain the stabilized fiber bundle shown in Table 1.

The resulting stabilized fiber bundle was subjected to a pre-carbonization treatment in a nitrogen atmosphere at a maximum temperature of 800°C while stretching the fiber bundle, to obtain a pre-carbonized fiber bundle. The resulting pre-carbonized fiber bundle was subjected to a carbonization treatment in a nitrogen atmosphere at a maximum temperature of 1,350°C, while stretching the fiber bundle. The resulting carbon fiber bundle was subjected to an electrochemical treatment of fiber surface at a quantity of electricity of 6 coulombs per g of carbon fibers, using an aqueous solution of sulfuric acid as an electrolytic solution. The carbon fibers subjected to the electrochemical treatment of fiber surface was subsequently washed with water, and dried in heated air at 150°C in order to remove the water. Thereafter, a 10-mole adduct of bisphenol A ethylene oxide as a sizing agent was applied to the carbon fibers, and the carbon fibers were heat-treated at a temperature of 210°C for 75 seconds, to obtain a carbon fiber bundle. The carbon fiber bundle prepared under the above-described conditions had an average single-fiber diameter d of 7.0 μm, a blackening thickness K of 2.5 μm, an orientation parameter of crystallites, Π of 79.6%, an adhesion amount of the sizing agent of 0.6% by mass, a coefficient of variation of the mass per unit length (g/m) of 0.25%, and the number of fuzzes per meter during the unwinding of 3.0. The results are shown in Table 1.

(Example 2)

A carbon fiber bundle was obtained in the same manner as in Example 1, except that a stabilized fiber bundle was obtained by performing the first stabilization step at a stabilization temperature of 238°C for a stabilization time of 31 minutes, and performing the second stabilization step at a stabilization temperature of 263°C for a stabilization time of 14 minutes, in the stabilization step.

(Example 3)

A carbon fiber bundle was obtained in the same manner as in Example 1, except that a stabilized fiber bundle was obtained by performing the first stabilization step at a stabilization temperature of 235°C for a stabilization time of 37 minutes, and performing the second stabilization step at a stabilization temperature of 263°C for a stabilization time of 14 minutes, in the stabilization step.

(Example 4)

A carbon fiber bundle was obtained in the same manner as in Example 1, except that a stabilized fiber bundle was obtained by performing the first stabilization step at a stabilization temperature of 238°C for a stabilization time of 31 minutes, and performing the second stabilization step at a stabilization temperature of 268°C for a stabilization time of 11 minutes, in the stabilization step.

(Example 5)

A carbon fiber bundle was obtained in the same manner as in Example 1, except that a stabilized fiber bundle was obtained by performing the first stabilization step at a stabilization temperature of 235°C for a stabilization time of 37 minutes, and performing the second stabilization step at a stabilization temperature of 268°C for a stabilization time of 11 minutes, in the stabilization step.

(Example 6)

The same procedure as in Example 1 was carried out except that the amount of extrusion of the spinning dope solution from the spinneret was changed, to obtain a carbon fiber precursor fiber bundle having a single fiber fineness of 1.7 dtex and an orientation parameter of crystallites of 87.0%. Subsequently, the carbon fiber precursor fiber bundle was subjected to the first stabilization step in which the fiber bundle was stabilized in an oven in an air atmosphere at a stabilization temperature of 240°C for a stabilization time of 29 minutes, while stretching the fiber bundle at a stretch ratio of 1.3, and then subjected to the second stabilization step in which the fiber bundle was stabilized in the oven at a stabilization temperature of 263°C for a stabilization time of 14 minutes, while stretching the fiber bundle at a stretch ratio of 1.0, to obtain a stabilized fiber bundle. The resulting stabilized fiber bundle was treated in the same manner as in Example 1, to obtain a carbon fiber bundle.

(Example 7)

A carbon fiber bundle was obtained in the same manner as in Example 6, except that a stabilized fiber bundle was obtained by performing the first stabilization step at a stabilization temperature of 235°C for a stabilization time of 37 minutes, and performing the second stabilization step at a stabilization temperature of 263°C for a stabilization time of 14 minutes, in the stabilization step.

(Example 8)

A carbon fiber bundle was obtained in the same manner as in Example 6, except that a stabilized fiber bundle was obtained by performing the first stabilization step at a stabilization temperature of 235°C for a stabilization time of 37 minutes, and performing the second stabilization step at a stabilization temperature of 268°C for a stabilization time of 11 minutes, in the stabilization step.

(Comparative Example 1)

A carbon fiber bundle was obtained in the same manner as in Example 1, except that a stabilized fiber bundle was obtained by performing the first stabilization step at a stabilization temperature of 243°C for a stabilization time of 24 minutes, and performing the second stabilization step at a stabilization temperature of 263°C for a stabilization time of 14 minutes, in the stabilization step.

(Comparative Example 2)

A carbon fiber bundle was obtained in the same manner as in Example 1, except that a stabilized fiber bundle was obtained by performing the first stabilization step at a stabilization temperature of 247°C for a stabilization time of 19 minutes, and performing the second stabilization step at a stabilization temperature of 268°C for a stabilization time of 14 minutes, in the stabilization step.

(Comparative Example 3)

The same procedure as in Example 1 was carried out except that the amount of extrusion of the spinning dope solution from the spinneret was changed, and that the fiber bundle after the dry densification treatment was stretched 3.7 times in a pressurized steam such that the total stretch ratio during spinning was 13 times, to obtain a carbon fiber precursor fiber bundle having a single fiber fineness of 1.1 dtex and an orientation parameter of crystallites of 89.0%. Subsequently, the carbon fiber precursor fiber bundle was subjected to the first stabilization step in which the fiber bundle was stabilized in an oven in an air atmosphere at a stabilization temperature of 253°C for a stabilization time of 14 minutes, while stretching the fiber bundle at a stretch ratio of 0.9, and then subjected to the second stabilization step in which the fiber bundle was stabilized in the oven at a stabilization temperature of 263°C for a stabilization time of 14 minutes, while stretching the fiber bundle at a stretch ratio of 1.0, to obtain a stabilized fiber bundle. The resulting stabilized fiber bundle was treated in the same manner as in Example 1, to obtain a carbon fiber bundle.

[Table 1]

[Table 1]

| | | Unit | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Carbon fiber bundle | Strand strength | GPa | 5.1 | 5.2 | 5.4 | 5.5 | 5.6 | 5.0 | 5.3 | 5.5 | 5.1 | 5.0 | 5.5 |
| | Strand modulus | GPa | 209 | 212 | 213 | 210 | 214 | 209 | 212 | 213 | 204 | 195 | 214 |
| | Number of filaments | number | 12,000 | 12,000 | 12,000 | 12,000 | 12,000 | 12,000 | 12,000 | 12,000 | 12,000 | 12,000 | 12,000 |
| | Average single-fiber diameter d | μm | 7.0 | 7.0 | 7.0 | 7.0 | 7.0 | 7.0 | 7.0 | 7.0 | 7.0 | 7.0 | 7.0 |
| | Blackening thickness K | μm | 2.5 | 2.6 | 2.7 | 2.5 | 2.8 | 2.5 | 2.7 | 2.7 | 2.4 | 2.3 | 2.4 |
| | Ratio of blackening layer | % | 92 | 93 | 95 | 92 | 96 | 92 | 95 | 95 | 90 | 88 | 90 |
| | Orientation parameter of crystallites, Π | % | 79.6 | 79.7 | 79.9 | 79.7 | 79.9 | 79.6 | 79.7 | 79.9 | 79.0 | 78.2 | 81 |
| | Ratio of crystallinity Rr between inner and outer layers | - | 1.02 | 1.02 | 1.02 | 1.02 | 1.02 | 1.04 | 1.04 | 1.04 | 1.02 | 1.02 | 1.06 |
| | Coefficient of variation of mass per unit length (g/m) | % | 0.25 | 0.25 | 0.25 | 0.25 | 0.25 | 0.45 | 0.45 | 0.45 | 0.25 | 0.25 | 0.75 |
| | Number of fuzzes during unwinding | Counted number/m | 3.0 | 1.8 | 1.0 | 2.0 | 0.8 | 3.2 | 1.8 | 1.2 | 4.0 | 4.6 | 0.8 |

(continued)

| | | Unit | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Stabilized fiber bundle | Stretch ratio in first stabilization step | - | 1.6 | 1.6 | 1.6 | 1.6 | 1.6 | 1.3 | 1.3 | 1.3 | 1.6 | 1.6 | 0.9 |
| | IR peak intensity ratio A after first stabilization step | - | 0.74 | 0.75 | 0.76 | 0.74 | 0.76 | 0.74 | 0.76 | 0.76 | 0.73 | 0.70 | 0.68 |
| | IR peak intensity ratio A after second stabilization step | - | 0.65 | 0.65 | 0.65 | 0.63 | 0.63 | 0.65 | 0.65 | 0.63 | 0.65 | 0.63 | 0.65 |
| | IR peak intensity ratio B after second stabilization step | - | 0.71 | 0.71 | 0.71 | 0.71 | 0.71 | 0.71 | 0.71 | 0.71 | 0.71 | 0.71 | 0.71 |
| Carbon fiber precursor fiber bundle subjected to stabilization step | Single fiber fineness | dtex | 2.1 | 2.1 | 2.1 | 2.1 | 2.1 | 1.7 | 1.7 | 1.7 | 2.1 | 2.1 | 1.1 |
| | Orientation parameter of crystallites | % | 84.0 | 84.0 | 84.0 | 84.0 | 84.0 | 87.0 | 87.0 | 87.0 | 84.0 | 84.0 | 89.0 |
| Evaluation | Evaluation of Spreadability | - | S | S | S | S | S | A | A | A | S | S | B |
| | Processability (fuzz) | - | B | A | S | A | S | B | A | S | C | C | S |

Industrial Applicability

The present invention enables to produce a carbon fiber bundle in which the variation in the mass per unit length (g/m) of the carbon fiber bundle is small, and which simultaneously satisfies excellent strand tensile strength and strand tensile modulus, by controlling the stretch ratio in the spinning step and the stabilization step, and by performing the initial stage of the stabilization at an appropriate temperature. The carbon fiber bundle obtained by the present invention can be suitably used for members of aircrafts, automobiles and marine vessels, and in sports applications such as golf club shafts and fishing rods, as well as general industrial applications such as pressure vessels, utilizing the characteristics as described above.

**Claims**

1. A carbon fiber bundle having:

   a tensile strength of resin-impregnated strands of from 4.5 to 6.5 GPa,
   a tensile modulus of resin-impregnated strands of from 205 to 270 GPa,
   the number of filaments of from 6,000 to 36,000, and
   a coefficient of variation, which is represented by the ratio of the standard deviation to the mean value ([standard deviation] / [mean value] $\times$ 100 (%)), of the mass per unit length (g/m) of said carbon fiber bundle, of from 0.00 to 0.5%.

2. The carbon fiber bundle according to claim 1, wherein said carbon fiber bundle has:

   an average single-fiber diameter d (unit: $\mu$m) of the carbon fibers of 6.0 $\mu$m or more and less than 8.0 $\mu$m;
   a blackening thickness K (unit: $\mu$m) of said carbon fibers of 0.38 $\times$ d or more; and
   an orientation parameter of crystallites, $\Pi$, of 79.5% or more.

3. The carbon fiber bundle according to claim 1 or 2, wherein, when the ratio (Ri/Ro) of the crystallinity Ri of an inner layer to the crystallinity Ro of an outer layer, of a single fiber, as determined by Raman spectroscopy, is defined as Rr, the value of Rr is 1.03 or less.

4. The carbon fiber bundle according to claim 1 or 2, wherein the number of fuzzes per meter during the unwinding of said carbon fiber bundle is 1.5 or less.

5. A towpreg using the carbon fiber bundle according to claim 1 or 2.

6. A carbon fiber-reinforced composite material using the carbon fiber bundle according to claim 1 or 2.

7. A pressure vessel using the carbon fiber bundle according to claim 1 or 2.

8. A method of producing the carbon fiber bundle according to claim 1 or 2, the method comprising:

   subjecting a carbon fiber precursor fiber bundle having a single fiber fineness of from 1.4 to 3.4 dtex to a stabilization treatment, while stretching the fiber bundle at a stretch ratio of from 1.30 to 3.00, to obtain a stabilized fiber bundle, and
   then subjecting said stabilized fiber bundle to a heat treatment in an inert atmosphere at a temperature of from 1,200 to 3,000°C, to obtain said carbon fiber bundle.

9. The method of producing the carbon fiber bundle, according to claim 8,

   wherein said stabilization treatment comprises a two-stage treatment process including a first stabilization step and a second stabilization step,

      wherein, in said first stabilization step, the first stabilization step is performed until the ratio of the peak intensity at 1,453 cm$^{-1}$ to the peak intensity at 1,370 cm$^{-1}$ in an infrared spectrum is within the range of from 0.74 to 0.80, and
      wherein, in said second stabilization step, which is performed after said first stabilization step, the second stabilization step is performed until the ratio of the peak intensity at 1,453 cm$^{-1}$ to the peak intensity at 1,370 cm$^{-1}$ in said infrared spectrum is within the range of from 0.60 to 0.65, and until the ratio of the peak intensity at 1,254 cm$^{-1}$ to the peak intensity at 1,370 cm$^{-1}$ in said infrared spectrum is within the range of from 0.70 to 0.80, and

wherein said stabilized fiber bundle obtained through said stabilization treatment is subjected to a heat treatment in an inert atmosphere at a temperature of from 1,200 to 3,000°C, to obtain said carbon fiber bundle.

## INTERNATIONAL SEARCH REPORT

| | International application No. |
|---|---|
| | **PCT/JP2023/031152** |

| A. | CLASSIFICATION OF SUBJECT MATTER |
|---|---|

*D01F 9/22*(2006.01)i; *B29B 11/16*(2006.01)i; *B29K 105/10*(2006.01)n
FI:   D01F9/22; B29B11/16; B29K105:10

According to International Patent Classification (IPC) or to both national classification and IPC

| B. | FIELDS SEARCHED |
|---|---|

Minimum documentation searched (classification system followed by classification symbols)

D01F9/08-9/32; B29B 11/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019/087766 A1 (TORAY INDUSTRIES, INC.) 09 May 2019 (2019-05-09) claim 1, paragraphs [0028], [0055]-[0063], examples | 1-9 |
| A | JP 2002-266173 A (MITSUBISHI RAYON CO., LTD.) 18 September 2002 (2002-09-18) claim 1, paragraphs [0033]-[0043], [0049], examples | 1-9 |
| A | JP 11-12854 A (TORAY INDUSTRIES, INC.) 19 January 1999 (1999-01-19) example 2 | 1-9 |
| A | JP 2008-214795 A (TORAY INDUSTRIES, INC.) 18 September 2008 (2008-09-18) claims 1-3, paragraphs [0034]-[0036], examples 1, 2 | 1-9 |
| A | WO 00/77282 A1 (MITSUBISHI RAYON CO., LTD.) 21 December 2000 (2000-12-21) claims 1, 2, page 8 | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/031152**

| Patent document cited in search report | | | Publication date (day/month/year) | Patent family member(s) | | | Publication date (day/month/year) |
|---|---|---|---|---|---|---|---|
| WO | 2019/087766 | A1 | 09 May 2019 | US 2020/0385892 A1 claim 1, paragraphs [0041], [0068]-[0076], examples EP 3705610 A1 KR 10-2020-0040797 A CN 111263834 A | | | |
| JP | 2002-266173 | A | 18 September 2002 | (Family: none) | | | |
| JP | 11-12854 | A | 19 January 1999 | (Family: none) | | | |
| JP | 2008-214795 | A | 18 September 2008 | (Family: none) | | | |
| WO | 00/77282 | A1 | 21 December 2000 | US 6245423 B1 claims 1, 2, column 4, line 58 to column 5, line 3 | | | |

Form PCT/ISA/210 (patent family annex) (January 2015)

**REFERENCES CITED IN THE DESCRIPTION**

**Patent documents cited in the description**

- WO 9745576 A
- JP 2004300600 A
- JP 2006283225 A
- JP 2017066580 A
- JP 2009079343 A
- WO 2008063886 A
- JP 2022519335 A